Europäisches Patentamt

European Patent Office

Office européen des brevets

(11) Publication number: **0 079 988**
**A1**

(12) **EUROPEAN PATENT APPLICATION**

(21) Application number: **81305508.4**

(22) Date of filing: **23.11.81**

(51) Int. Cl.³: **G 01 D 5/26**, G 01 B 11/16,
**G 01 L 11/00**

(43) Date of publication of application: **01.06.83**
**Bulletin 83/22**

(84) Designated Contracting States: **BE DE FR IT NL**

(71) Applicant: **Burt, Dennis William, The Bungalow
Woodhouse Lane Moulton Loosegate, Spalding
Lincolnshire (GB)**

(72) Inventor: **Burt, Dennis William, The Bungalow
Woodhouse Lane Moulton Loosegate, Spalding
Lincolnshire (GB)**

(74) Representative: **Abrams, Michael John et al, Haseltine
Lake & Co. 28, Southampton Buildings Chancery Lane,
London WC2A 1AT (GB)**

(54) **Optical fibre transmission instrumentation.**

(57) The invention relates to remote sensing instrumentation wherein the value of a physical parameter e.g. pressure or temperature being monitored by a primary sensor or detector is transmitted to an indicator/control unit by light signals through optical fibres rather than the normal electrical signals through cables. An optical coupling element which is advantageously in the form of a mechanical/optical converter (1) receives an input (16) from a light source (7, 27) via an optical fibre (3) and produces a reference output (18) and an active output (17) which are returned via optical fibres (5) and (4) respectively to a comparator (8). The comparator derives an electrical signal proportional to the response of the primary detector (2).

1.

OPTICAL FIBRE TRANSMISSION INSTRUMENTATION

This invention relates to a new range of analogue instrumentation based upon optical fibre transmission instead of electrical cable transmission. The apparatus of the invention is particularly well suited for remote sensing or measurement of physical parameters which term, as used herein, covers inter alia temperature, pressure, humidity, torque, differential pressure, proximity, electrical charge, electrical potential, magnetic flux and acoustic energy; the measurement of other physical parameters is also possible with the apparatus of this invention.

According to one aspect of the present invention, there is provided apparatus for sensing or measurement of a physical parameter, which apparatus comprises an optical coupling element associated with, or adapted to be associated with, a detector responsive to the parameter to be sensed or measured; a control unit including an indicating instrument and a light source; and a plurality of optical fibres which, at least when the apparatus is in use, extend between the control unit and the optical coupling element and provide optical communication therebetween, wherein (1) the optical coupling element includes an optical input from the light source, means for modifying light received at the input in accordance with the output of the detector which in use is associated with the optical coupling element, a first output for light modified in this way and a second output for an unmodified, reference light; (2) a first optical fibre or a first group of optical fibres serve(s) to transmit the light from the light source to the optical coupling element, a second optical fibre or a second group of optical fibres serve(s) to transmit light from the first output of the optical coupling element to the control unit and a third optical fibre or a third group of optical fibres serve(s) to transmit light from the second output of the optical coupling element to the control unit; (3) the control unit comprises means for comparing light received from the first and second outputs of the optical coupling element and for deriving therefrom a measurement or indication pertaining to the parameter being investigated; and (4) said indicating instrument is adapted to display the measurement or indication derived from the comparator means.

As used herein, the term "light" means electromagnetic radiation in the infra-red, visible or ultraviolet region of the spectrum.

In one embodiment of the invention, the optical coupling element is such that the optical path of light travelling from the input to the first output thereof is varied in accordance with the output of the detector for the parameter being investigated. In another embodiment, the optical coupling element is such that the intensity of light travelling through the optical coupling element from the input to the first output thereof is varied in accordance with the output of the detector. In yet other embodiments, the optical coupling element is such that either the phase of light, or the polarisation of light, travelling through the optical coupling element from the input to the first output thereof is varied in accordance with the output of the detector.

Preferably, the optical coupling element is a mechanical/optical converter (MOC) and the control unit is an optical/electro converter (OEC), these two converters being linked only by a multi-core optical fibre cable.

According to another aspect of the present invention, there is provided a remote sensing equipment or instrument using a plurality of optical fibres between a sensor and an indicating instrument, wherein one fibre is used to transmit light from the indicating instrument to the sensor; means are provided at the sensor to modify this light in accordance with a physical parameter being sensed by the sensor and to transmit this modified light back to the indicating instrument through one or more of the remaining fibres and also to transmit an unmodified reference light back to the indicating instrument through a further one or more of the remaining optical fibres; means are provided to compare the modified light with the unmodified reference light; and the result of this comparison is represented as the value of the physical property experienced by the sensor.

The means provided at the sensor for modifying the light is preferably an optical coupling element as in the first aspect of the invention defined above. The optical coupling element is preferably connected to the sensor or detector _via_ a bourdon tube, a diaphragm, a torque tube or bellows which serve to transmit a mechanical output from the sensor or detector to the optical coupling element.

When the apparatus of the invention is in use, the light generator of the control unit or OEC transmits light down one core of the multi-core optical fibre cable to the MOC and receives light back from the MOC from other cores of the multi-core fibre. The returned light is proportional to the physical parameter measured by the sensor or detector which is associated with the MOC, the light having been modified by a suitable optical link which varies in direct proportion to this physical parameter.

Two modes of operation of apparatus in accordance with the present invention will now be described. In both cases, the apparatus includes an optical coupling element in the form of a mechanical/optical converter (MOC) and a control unit in the form of an optical/ electro converter (OEC).

In one embodiment, the OEC generates light pulses which are transmitted down one core of the multi-core optical fibre cable. The intensity of the light pulses is not critical, nor is the absolute value of the frequency, although it is critical to maintain the value of the given frequency once set. The light pulses are received by the MOC, and the two optical outputs of the MOC are conveyed back to the OEC. Thus the OEC receives two sets of light pulses one of which is an unmodified reference output and the other of which is modified in accordance with the instantaneous reading of the detector which is acting on the optical element within the MOC. Thus the difference in phase between the two sets of light pulses received at the OEC is proportional to the output of the detector acting upon the optical element of the MOC. Where the MOC is connected to the detector by a diaphragm which exerts a force upon the MOC which is proportional to the output of the detector, the phase difference of the received light pulses is proportional to the physical force exerted upon the MOC. This phase difference is converted to an electrical signal within the OEC and this signal can be used for indication, recording and/or control as required. In this embodiment, the MOC may be exposed to the effects of temperature, pressure, differential pressure, proximity or torque (amongst other physical parameters) and changes these into a physical force to move one end of a mechanical beam, shaft or quadrant similar to the standard instrumentation of the bourdon tube, bellows or torque tube type. The other end of this mechanical link forms a reflective optical couple between the light pulses received from the OEC and the two sets of pulses returned to the OEC. Using suitable solid and/or flexible materials having similar optical properties, one set of light pulses has a fixed optical couple reflected distance no matter what position the beam, shaft or quadrant takes, while the other set of light pulses has a varying optical couple reflected distance which is proportional to, for example, the beam position. This enables a doppler-type measurement to be made between the two sets of light pulses sent back to the OEC, such a measurement being proportional to the original physical signal accepted by the MOC. Suitable shaping of the optical couple enables direct square law conversion for flow measurement or similar, with greater accuracy than conventional conversion of the final electrical signal.

In a second embodiment, the OEC transmits light characterised by a uniform parameter (e.g. intensity) down one core of the multi-core optical fibre cable to the MOC. The absolute value of the parameter of the light is not critical but the value should be relatively constant. As in the embodiment described above, the two outputs from the MOC convey light back to the OEC. Assuming that the parameter of the light which is of interest is its intensity, then the modified light differs in intensity from the unmodified reference light. The difference in intensity is proportional to the parameter being detected by the sensor or detector. In the MOC, the optical path between the input and the two outputs is identical when there is no reading at the detector, but as the reading of the detector progressively increases, so the difference between the two optical paths within the MOC likewise increases. Where the output of the detector is conveyed to the MOC as a physical force, then the difference in the two light intensities transmitted back from the MOC to the OEC varies directly with the physical force exerted on the MOC and therefore is directly proportional to the output of the detector.

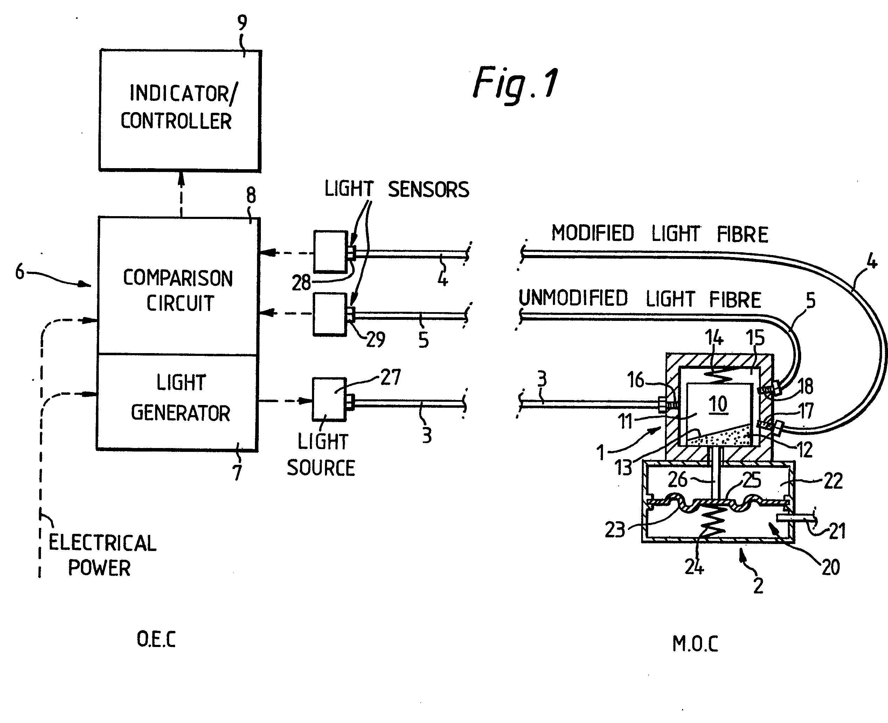

The second embodiment described above in general terms will be explained in greater detail with reference to the accompanying drawing, which shows apparatus in accordance with the invention for the remote measurement of pressure.

Referring to the drawing, the apparatus comprises an optical coupling element 1 associated with a pressure detector 2 which together constitute a mechanical/optical converter (MOC). The MOC is connected by optical fibres 3, 4 and 5 to a control unit 6 which comprises a light generator 7, a comparison circuit 8 and an indicator/controller 9.

The pressure detector 2 includes a chamber 20 which is connected via a pressure equalising tube 21 with the region whose pressure is to be measured, and a second chamber 22 which is separated from the chamber 20 by a diaphragm 23. Biasing means in the form of a tension spring 24 urges the diaphragm 23 in a direction to oppose the pressure applied to chamber 20 through pressure equalising tube 21. The diaphragm 23 includes a rigid central area 25 which co-operates with a shaft 26. The opposite end of shaft 26 acts upon a block 10 within the optical coupling element 1. The block 10 is a perspex block having a clear upper portion 11 and a lower portion 12 which is less transparent than portion 11. The boundary 13 between the two areas of block 10 is inclined in the direction shown in the drawing. A light compression spring 14 tends to oppose movement of the perspex block 10. The block is immersed in glycerol 15. Optical fibre 3 is connected to an optical input 16; optical fibre 4 is connected to a first optical output 17; and optical fibre 5 is connected to a second optical output 18.

The other end of optical fibre 3 communicates with a light source 27 which in turn is connected to light generator 7. Light sensors 28 and 29 are provided at the ends of optical fibres 4 and 5 remote from the outputs 17 and 18, respectively.

The apparatus shown in the drawing functions as follows. The pressure to be detected by the apparatus is communicated via pressure equalising tube 21 to the chamber 20 of pressure detector unit 2. This pressure displaces diaphragm 23 upwardly against the action of tension spring 24, thereby lifting shaft 26 and optical block 10 against the force of compression spring 14. The raising of block 10 results in the optical path between input 16 and output 17 intercepting the less transparent zone 12, while the optical path between input 16 and output 18 remains the same. It will be appreciated that, as perspex block 10 moves further upwardly, an increasing proportion of the optical path between input 16 and output 17 is constituted by the less transparent region 12 of the block. Consequently the light received at output 17 is attenuated to an extent which is proportional to the position of diaphragm 23, and thus is in turn proportional to the pressure applied to the chamber 20. The attenuated light travels along optical fibre 4 to light sensor 28. The unmodified reference light travels from output 18 along optical fibre 5 to light sensor 29. The output of the light sensors 28 and 29 is fed to comparison circuit 8, and this circuit generates an electrical signal which is proportional to the difference in intensity as detected at light sensors 28 and 29. The electrical signal is then supplied to the indicator unit 9, the display of which can be directly calibrated in pressure units.

As described above, the apparatus comprises just three optical fibres. It will be appreciated that instead of single fibres 3, 4 and 5 there may be used separate groups of optical fibres each constituted by two or more individual fibres. In general, the optical fibres connecting the optical coupling element and the control unit will be in the form of an optical fibre cable having three groups of fibres corresponding to the individual fibres 3, 4 and 5 as shown in the drawing.

CLAIMS:

1. Apparatus for sensing or measurement of a physical parameter, which apparatus comprises an optical coupling element associated with, or adapted to be associated with, a detector responsive to the parameter to be sensed or measured; a control unit including an indicating instrument and a light source; and a plurality of optical fibres which, at least when the apparatus is in use, extend between the control unit and the optical coupling element and provide optical communication therebetween, wherein (1) the optical coupling element includes an optical input from the light source, means for modifying light received at the input in accordance with the output of the detector which in use is associated with the optical coupling element, a first output for light modified in this way and a second output for an unmodified, reference light; (2) a first optical fibre or a first group of optical fibres serve(s) to transmit the light from the light source to the optical coupling element, a second optical fibre or a second group of optical fibres serve(s) to transmit light from the first output of the optical coupling element to the control unit and a third optical fibre or a third group of optical fibres serve(s) to transmit light from the second output of the optical coupling element to the control unit; (3) the control unit comprises means for comparing light received from the first and second outputs of the optical coupling element and for deriving therefrom a measurement or indication pertaining to the parameter being investigated; and (4) said indicating instrument is adapted to display the measurement or indication derived from the comparator means.

2. Apparatus as claimed in claim 1, wherein the said optical coupling element is such that the optical path of light travelling from the input to the first output thereof is varied in accordance with the output of the detector.

3.   Apparatus as claimed in claim 1, wherein the said optical coupling element is such that the intensity of light travelling through the optical coupling element from the input to the first output thereof is varied in accordance with the output of the detector.

4.   Apparatus as claimed in claim 1, wherein the said optical coupling element is such that the phase of light travelling through the optical coupling element from the input to the first output thereof is varied in accordance with the output of the detector.

5.   Apparatus as claimed in claim 1, wherein the said optical coupling element is such that the polarisation of light travelling through the optical coupling element from the input to the first output thereof is varied in accordance with the output of the detector.

6.   Apparatus as claimed in claim 3, wherein the optical coupling element includes a block having a first region of relatively high optical transparency and a second region of relatively low optical transparency, the block being positioned so that the region of relatively low optical transparency is caused to occupy a proportion of the optical path between the input and the first output of the optical coupling element which proportion is dependent upon the output of the detector with which the optical coupling element is associated.

7.   Apparatus as claimed in any preceding claim, wherein the optical coupling element is connected to the detector with which it is associated via a bourdon tube, a diaphragm, a torque tube or bellows.

8.   Apparatus as claimed in any preceding claim, wherein the light source is adapted to produce pulses of light.

9.   A remote sensing equipment or instrument using a plurality of optical fibres between a sensor and an indicating instrument, wherein one fibre is used to transmit light from the indicating instrument to the sensor; means are provided at the sensor to modify this light in accordance with a physical parameter being sensed by the sensor and to transmit this modified light back to the indicating instrument through one or more of the remaining fibres and also to transmit an unmodified reference light back to the indicating instrument through a further one or more of the remaining optical fibres; means are provided to compare the modified light with the unmodified reference light; and the result of this comparison is represented as the value of the physical property experienced by the sensor.

10. Apparatus as claimed in claim 9, wherein the means provided at the sensor for modifying the light is an optical couple manufactured either from solid or flexible material and linked to a bourdon tube, a diaphragm, bellows or similar physical sensing device such that the optical path through the optical couple is directly varied by the physical parameter sensed by the device.

11. Apparatus as claimed in claim 9 or 10, wherein light of constant value is sent from the indicating instrument through one optical fibre to the sensor and is returned both (a) unmodified and (b) modified in value by the physical parameter sensed by the sensor back through a respective one or more of the remaining fibres to the indicating instrument where means are provided to compare the unmodified and modified values, the result of the comparison being displayed as the value of the physical parameter sensed by the sensor.

12. Apparatus as claimed in claim 9, wherein pulsed light is sent from the indicating instrument through one optical fibre to the sensor and is returned both (a) unmodified and (b) modified in phase by the physical parameter sensed by the sensor back through a respective one or more of the remaining fibres to the indicating instrument where means are provided to compare the difference in phase between the unmodified and modified pulses this difference being displayed as the value of the physical parameter sensed by the sensor.

13. Apparatus as claimed in any preceding claim, wherein the light source emits electromagnetic radiation in the visible, infra-red, or ultra-violet regions of the spectrum.

14. Apparatus according to claim 1 or 9, and substantially as hereinbefore described with reference to the accompanying drawing.

Fig.1

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| E | EP-A-0 021 199  (TOKYO SHIBAURA)  *Abstract; figures; claims 1-3* | 1-5,8, 9,11-14 | G 01 D  5/26 <br> G 01 B  11/16 <br> G 01 L  11/00 |
| A | EP-A-0 005 798  (ASEA) *Abstract; figures; claims 1-5* | 1-14 | |
| A | FR-A-2 436 368  (ASEA) *Claims; figures* | 1-14 | |
| A | CONTROL AND INSTRUMENTATION, vol. 13, no. 3, March 1981, pages 45-47, London (GB); "Remote sensing could emerge as a major role for fibre optics". *The whole document* | 1-14 | |

TECHNICAL FIELDS SEARCHED (Int. Cl. 3)

G 01 D  5
G 01 B  11
G 01 L  1
G 01 L  11
G 01 R  15

The present search report has been drawn up for all claims

| Place of search THE HAGUE | Date of completion of the search 09-08-1982 | Examiner LLOYD P.A. |
|---|---|---|

EPO Form 1503. 03.82